# EUROPEAN PATENT APPLICATION

(11) **EP 2 007 139 A2**
(43) Date of publication of application: **24.12.2008**
(21) Application number: 06722241.4
(22) Date of filing: 03.04.2006
(51) Int. Cl.: H04N 5/74

(54) **VIDEO INFORMATION APPARATUS AND IMAGE PROCESSING METHOD**

(71) Applicant: Fang, Ko-Cheng, Taipei County, Taiwan (CN)
(72) Inventor: Fang, Ko-Cheng, Taipei County, Taiwan (CN)
(74) Representative: Chaillot, Geneviève
(86) International application number: PCT/CN2006/000589
(87) International publication number: WO 2007/112612

(57) **Abstract**

A video information apparatus for displaying a ring-filed image is composed of computer system and display apparatus. The computer system is composed of the master control system and at least a controlled system. The master control system separates the ring-filed image into plural visual angle images, and the controlled system is electrically connected to the master control system to process these visual angle images. The display apparatus is electrically connected to the computer system to display the ring-filed image.

## Description

### BACKGROUND OF THE INVENTION

### Field of the Invention

The present invention is related to a video information apparatus; in particular, to a video information apparatus for displaying ring-filed image.

### Description of Related Art

As image technology advancing from historic black-and-white days into color era, then planar images, people incessantly chase for more realistic and richer image quality than common color images. Thanks to recent progress in the industry, people can now even watch stereo images at home with inexpensive PC's and input/output devices thereof, and the people's demand for production and quality of stereo images has evolved from conventional approach of showing two images on left and right eyes to searches for richer ring-filed image, which is now the major trend of image technology and attracts more and more people's attention.

Currently, certain multimedia game programs provide real-time processing and display features for plural visual angle images; however, such plural visual angle images can be simply displayed on one single screen, and their image quality as well as display speed related to object interactions are still essentially restricted in performance by the operation capability of personal computers on which the programs run, situation rendered thereon thus can not be close to the real world. In general, these plural visual angle images can be displayed in a split window shown on a planar screen only at lower image quality, but such a display mode cannot allow users to obtain highly realistic experience introduced by virtual reality effects.

The flight simulation systems for military use may provide 360° curved images and perform multi-user interactions in real-time; whereas such flight simulation systems require computer equipments of high computation ability, and computer equipments at such levels usually cost hundreds of millions NT dollars, indicating the limitation on budget may hinder popular usage thereof for commercial purpose.

Besides, in terms of display devices, existing projectors mostly can only project onto a plane, whose angle-of-view in width can be at maximum 90°. To enable the required 360° display effect, current approach is to adjust four projectors to allow them to project onto 4 screens surrounding these projectors. However, such an approach may be costly, and synchronous process and display between these devices are also difficult to be successfully achieved, so images shown on these four screens usually present poor consistency.

Hence, how to provide a video information apparatus facilitating display of ring-filed image with high quality and at the same time the feature of reduced cost has now become desirous for producers and users of video information apparatus.

### SUMMARY OF THE INVENTION

Therefore, the objective of the present invention is to provide a video information apparatus, which can display ring-filed image more efficiently and save significant amount of hardware cost.

In accordance with the aforementioned purpose of the present invention, a video information apparatus is herein provided for displaying ring-filed image. The said video information apparatus is composed of a computer system and a display apparatus. The computer system consists of a master control system and at least one controlled system. The master control system is used to divide the environmental image into a plurality of visual angle images, and the at least one controlled system is electrically connected to the master control system to process in distribution the plurality of visual angle images. The display apparatus is electrically connected to the computer system for displaying ring-filed image. For example, the above-mentioned master control system and controlled system may be computing resources such as plural workstations, personal computers or central processing units. In this way, the master control system is allowed to allocate the visual angle image to each controlled system so as to facilitate distributive process, thus achieving the objective of providing ring-filed image with high quality.

In one preferred embodiment of the present invention, the above-mentioned master control system further comprises an interaction/response module, in which the interaction/response module is used to compute interactions and responses between a plurality objects existing in the ring-filed image. For example, the interaction/response module can be used to compute in order to prevent inconsistency in the ring-filed image caused by distributive process as two of the above-said objects are respectively located in different visual angle images.

Similarly, the master control system described heretofore may also comprise an input module and an action input computing module. Herein, the input module is used to input data, e.g. joystick, keyboard, mouse or other input devices. The action input computing module is electrically connected to the said input module and the above-mentioned interaction/response module, in which the influence on the ring-filed image caused by the data inputted *via* the input module can be computed by using such an action input computing module. For instance, when a user inputs an instruction by means of a joystick to command a game character to swing the bat, the movement track of the game character's swing can be computed by the action input computing module in the master control system, accordingly preventing occurrence of possible inconsistency in the ring-filed image caused by distributive process in case that the said swing track passes through different visual angle images.

Additionally, the master control system may include an angle-of-view sound processing system. The angle-of-view sound processing system is electrically connected to the interaction/response module to process various sound effects in each visual angle image. That is, the sound effects in each visual angle image can be centrally processed by the master control system.

Similarly, the master control system may further consist of a visual angle image processing system. The visual angle image processing system is electrically connected to the interaction/response module to process visual effects in each visual angle image; e.g. sharpening, blurring or other visual effects. That is, the visual effects in each visual angle image can be centrally processed by the master control system.

In another preferred embodiment of the present invention, the aforementioned controlled system may further consist of an interaction/response module. Interactions and responses between plural objects existing in individual visual angle image can be computed by using such an interaction/response module. In this way, the computation of interactions and responses in respective visual angle image can be allocated to each controlled system so as to process in distribution and enable successful achievement of the purpose for offering the ring-filed image having high quality.

Similarly, the above-mentioned controlled system may also comprise an input module and an action input computing module. Herein, the input module is used to input data, e.g. joystick, keyboard, mouse or other input devices. The action input computing module is electrically connected to the said input module and the above-mentioned interaction/response module, in which the influence on the ring-filed image caused by the data inputted *via* the input module can be computed by using such an action input computing module. In this way, the computation of influence on respective visual angle image caused by the inputted data can be allocated to each controlled system to process in distribution to successfully achieve the objective of providing ring-filed image having high quality.

Additionally, the controlled system may include an angle-of-view sound processing system. The angle-of-view sound processing system is electrically connected to the interaction/response module to process various sound effects in each visual angle image. That is, the processing of sound effects in each visual angle image can be allocated to each controlled system to process in distribution to successfully achieve the objective of providing ring-filed image having high quality.

Similarly, the controlled system may further consist of a visual angle image processing system. The visual angle image processing system is electrically connected to the interaction/response module to process visual effects in each visual angle image; e.g. sharpening, blurring or other visual effects. That is, the processing of visual effects in each visual angle image can be allocated to each controlled system to process in distribution to successfully achieve the objective of providing ring-filed image having high quality.

Another objective of the present invention is to provide an image process method, which uses the method of distributive process to allow the processing of ring-filed image to consume less hardware expenditure to provide ring-filed image of high quality.

In accordance with the aforementioned purpose of the present invention, an image process method is herein provided, comprising the following steps:
(a) dividing the ring-filed image into a plurality of visual angle images;
(b) processing in distribution the plurality of visual angle images. In this way, it is possible to employ computing resources like workstations, personal computers or central processing units to allocate visual angle images to each workstation, personal computer or central processing unit, *e*.*g*. the computer system, to process in distribution to successfully achieve the objective of providing ring-filed image having high quality.

In a preferred embodiment of the present invention, these visual angle images are respectively displayed on a plurality of display apparatuses. For example, these visual angle images are respectively displayed on a plurality of displays arranged in circle, such as Liquid Crystal Displays (LCD's) or plasma displays. Or, alternatively, these visual angle images are respectively projected onto a plurality of screens arranged in circle by means of a plurality of projectors.

In another preferred embodiment of the present invention, it is also possible to first combine these visual angle images into a ring-filed image, and then have the generated ring-filed image displayed. For example, through a rotational projector, such a ring-filed image can be projected onto an environmental screen surrounding the rotational projector, in which the rotational projector uses the character of transient persistence of vision in human eyes, and the lens thereof rotates a full circle in 1/40 second to show the ring-filed image presenting a 360° angle-of-view. Alternatively, such a ring-filed image may be also projected onto a circular curved mirror by a projector, then through the reflection from the circular curved mirror, projected onto the environmental screen surrounding the circular curved mirror.

In an embodiment of the present invention, the interactions and responses between a plurality of objects in the ring-filed image can be computed after combination of the visual angle images. For example, the movement track after collision of two objects in the ring-filed image can be computed after combining the visual angle images, in order to prevent inconsistency in the ring-filed image caused by distributive process as the above-said two objects are respectively located in different visual angle images.

Similarly, the influence on the ring-filed image caused by the data inputted *via* the input module can be also computed after combination of the visual angle images. For example, when a user inputs an instruction by means of a joystick to command a game character to swing the bat, the movement track of the game character's swing can be computed after combination of the visual angle images in order to prevent occurrence of possible inconsistency in the ring-filed image caused by distributive process in case that the said swing track passes through different visual angle images.

Furthermore, in another embodiment of the present invention, the interactions and responses of the plurality of objects in individual visual angle image can be computed in the step of distributive process. In this way, the computations of the interactions and responses of the plurality of objects in individual visual angle image can be allocated to each workstation, personal computer or central processing unit, such as the disclosed computer system, to process in distribution so as to achieve the objective of providing the ring-filed image having high quality.

Similarly, the influence on the individual visual angle image caused by the data inputted *via* the input module can be also computed in the step of distributive process. In this way, the computations for the influence on the individual visual angle image caused by the data inputted *via* the input module can be allocated to each workstation, personal computer or central processing unit, such as the disclosed computer system, to process in distribution so as to achieve the obj ective of providing the ring-filed image having high quality.

Therefore, the video information apparatus and image processing method according to the present invention can effectively display ring-filed image or plural visual angle images with high quality, and provide the advantage of reduced cost. Additionally, the video information apparatus and image processing method according to the present invention can overcome as well the problem of poor consistency in displayed image of current technology.

### BRIEF DESCRIPTION OF THE DRAWINGS

The characteristics and features of the present invention can be further given by the following embodiments and appended drawings thereof.
Figure 1 shows a functional block diagram of a video information apparatus according to a preferred embodiment of the present invention.
Figure 2 shows a functional block diagram of the master control system depicted in Figure 1.
Figure 3 shows a functional block diagram of the controlled system depicted in Figure 1.
Figure 4 shows a top view diagram of a video information apparatus according to a preferred embodiment of the present invention.
Figure 5 shows a top view diagram of a video information apparatus according to another preferred embodiment of the present invention.
Figure 6 shows a top view diagram of a video information apparatus according to yet another preferred embodiment of the present invention.
Figure 7 shows a top view diagram of a video information apparatus according to still another preferred embodiment of the present invention.
Figure 8 shows a flowchart of the image processing method according to a preferred embodiment of the present invention.

### DETAILED DESCRIPTION OF THE PREFERRED EMBODIMENTS

The spirit of the present invention will now be illustrated more specifically with reference to the appended drawings and detailed descriptions. After thorough understanding of the preferred embodiments of the present invention, those skilled ones in the art can make changes and modifications based on the technology disclosed in the present teaching, without departing from the spirit and scope of the present invention.

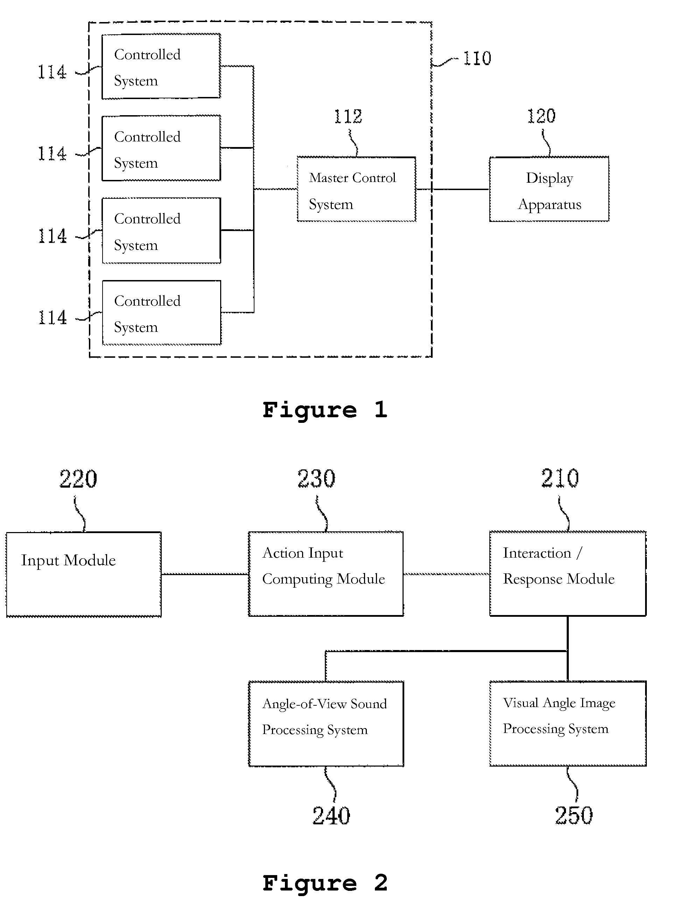

Refer to Figure 1, wherein a functional block diagram of a video information apparatus according to a preferred embodiment of the present invention is shown. The video information apparatus depicted in Figure 1 can be applied to ring-filed image display. The video information apparatus is composed of a computer system 110 and a display apparatus 120. Herein the computer system consists of a master control system 112 and at least one controlled system 114. The master control system 112 is used to divide the ring-filed image into a plurality of visual angle images, and the at least one controlled system 114 is electrically connected to the master control system 112 to process in distribution these visual angle images. The display apparatus 120 is electrically connected to the computer system 110 to display the ring-filed image. For example, the aforementioned master control system 112 and the controlled system 114 can be computing resources such as multiple workstations, personal computers or central processing units. In this way, the master control system 112 is allowed to allocate the visual angle image to each controlled system 114 to process in distribution, thus achieving the purpose of providing ring-filed image having high quality.

Furthermore, the preferable implementation for the aforementioned computer system 110 is in a single-host-multiple-processor architecture. That is, the master control system 112 and the controlled system 114 can be computing resources with multiple central processing units. If the master control system 112 and the controlled system 114 are multiple workstations or personal computers, then the data communications between the master control system 112 and the controlled system 114 need to be performed through network transmissions. Contrarily, in case the computer system 110 adopts a single-host-multiple-processor architecture, then data communications between the master control system 112 and the controlled system 114 can be performed without network transmissions, accordingly saving required time for data transfer.

Refer now to Figure 2, wherein a functional block diagram of the master control system depicted in Figure 1 is shown. In Figure 2, the above-mentioned master control system further consists of an interaction/response module 210. Such an interaction/response module 210 is used to compute the interactions and responses between a plurality of objects in the ring-filed image. For example, the movement track after collision of two objects in the ring-filed image can be computed by using the interaction/response module 210 in order to prevent inconsistency in the ring-filed image caused by distributive process as the above-said two objects are respectively located in different visual angle images.

Similarly, the aforementioned master control system may also include an input module 220 and an action input computing module 230. Herein the input module 220 is used for data input, e.g. joystick, keyboard, mouse or other input device. The action input computing module is electrically connected to the said input module 220 and the above-mentioned interaction/response module 210, in which the influence on the ring-filed image caused by the data inputted *via* the input module 220 can be computed by using such an action input computing module 230. For instance, when a user inputs an instruction by means of a joystick to command a game character to swing the bat, the movement track of the game character's swing can be computed by the action input computing module 230 in the master control system, accordingly preventing occurrence of possible inconsistency in the ring-filed image caused by distributive process in case that the said swing track passes through different visual angle images.

Additionally, the master control system may include an angle-of-view sound processing system 240. The angle-of-view sound processing system 240 is electrically connected to the interaction/response module 210 to process various sound effects in each visual angle image. That is, the sound effects in each visual angle image can be centrally processed by the master control system.

Similarly, the master control system may further consist of a visual angle image processing system 250. The visual angle image processing system 250 is electrically connected to the interaction/response module 210 to process visual effects in each visual angle image; e.g. sharpening, blurring or other visual effects. That is, the visual effects in each visual angle image can be centrally processed by the master control system.

Besides, the implementations for the aforementioned interaction/response module 210, action input computing module 230, angle-of-view sound processing system 240 and visual angle image processing system 250 can be optionally software programs or hardware circuits. Also, suitable configuration for these four components can be flexibly selected based on actual design and demand, without having to be conjunctively all in software programs or all in hardware circuits.

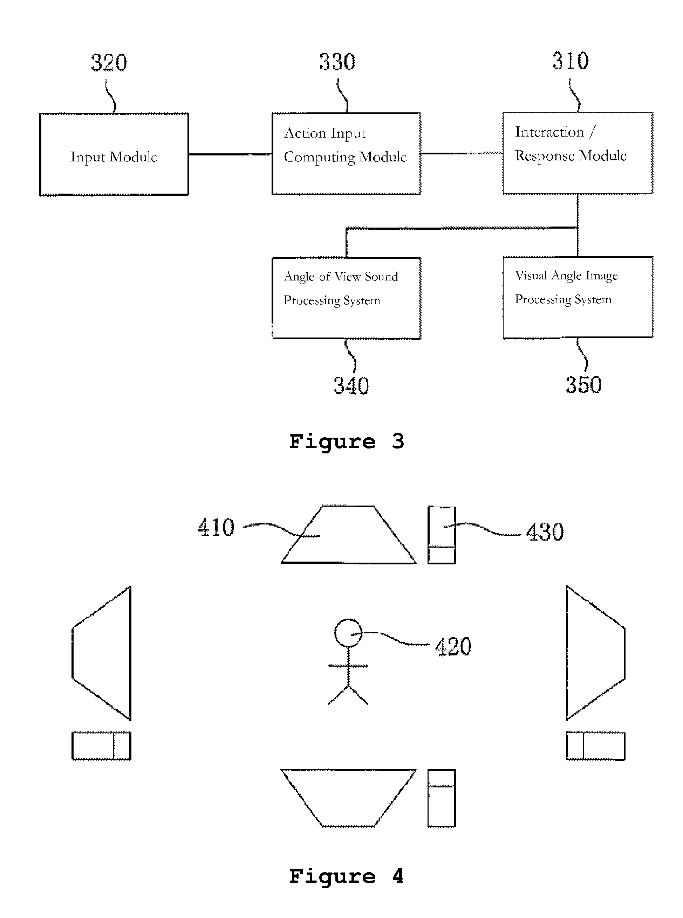

Refer now to Figure 3, a functional block diagram of the controlled system depicted in Figure 1 is shown. In Figure 3, the aforementioned controlled system may further consist of an interaction/response module 310. Interactions and responses between plural objects existing in individual visual angle image can be computed by using such an interaction/response module 310. In this way, the computation of interactions and responses in respective visual angle image can be allocated to each controlled system so as to process in distribution and enable successful achievement of the purpose for offering the ring-filed image having high quality.

Similarly, the above-mentioned controlled system may also comprise an input module 320 and an action input computing module 330. Herein, the input module 320 is used to input data, e.g. joystick, keyboard, mouse or other input devices. The action input computing module 330 is electrically connected to the said input module and the above-mentioned interaction/response module, in which the influence on the ring-filed image caused by the data inputted *via* the input module can be computed by using such an action input computing module 330. In this way, the computation of influence on respective visual angle image caused by the inputted data can be allocated to each controlled system to process in distribution to successfully achieve the objective of providing ring-filed image having high quality.

Additionally, the controlled system may include an angle-of-view sound processing system 340. The angle-of-view sound processing system 340 is electrically connected to the interaction/response module 310 to process various sound effects in each visual angle image. That is, the processing of sound effects in each visual angle image can be allocated to each controlled system to process in distribution to successfully achieve the objective of providing ring-filed image having high quality.

Similarly, the controlled system may further consist of a visual angle image processing system 350. The visual angle image processing system 350 is electrically connected to the interaction/response module 310 to process visual effects in each visual angle image; e.g. sharpening, blurring or other visual effects. That is, the processing of visual effects in each visual angle image can be allocated to each controlled system to process in distribution to successfully achieve the objective of providing ring-filed image having high quality.

Besides, the implementations for the aforementioned interaction/response module 310, action input computing module 330, angle-of-view sound processing system 340 and visual angle image processing system 350 can be optionally software programs or hardware circuits. Also, suitable configuration for these four components can be flexibly selected based on actual design and demand, without having to be conjunctively all in software programs or all in hardware circuits.

Refer now to Figure 4, wherein a top view diagram of a video information apparatus according to a preferred embodiment of the present invention is shown. In Figure 4, the display apparatus is composed of a plurality of displays 410. The said displays 410 are electrically connected to the computer system, arranged in circle and surrounding a user 420 to provide the user 420 with ring-filed image. Besides, a plurality of audio devices 430 may be also respectively placed about the displays 410 to provide the user 420 with environmental sound effects.

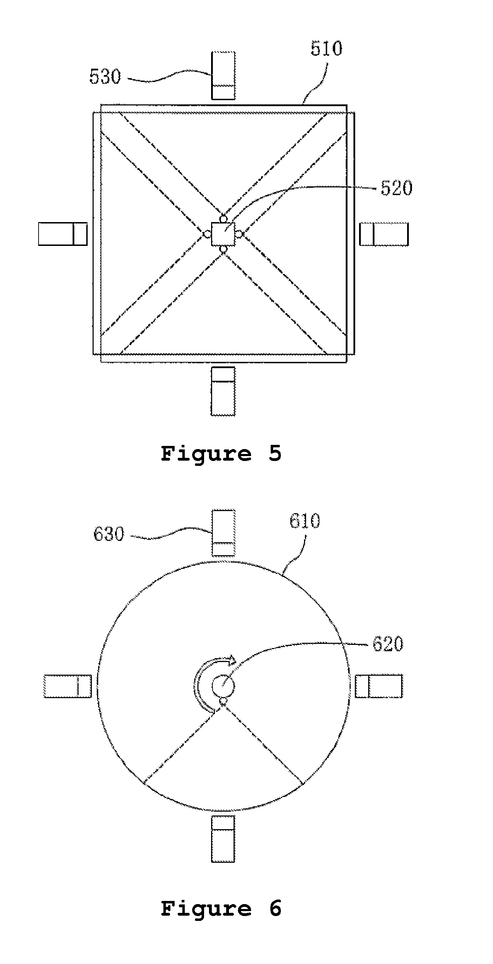

Refer next to Figure 5, wherein a top view diagram of a video information apparatus according to another preferred embodiment of the present invention is shown. In Figure 5, the display apparatus is composed of a plurality of screens 510 and a plurality of projectors 520. Herein the said plurality of screens 510 are arranged in circle, and the plurality of projectors 520 are electrically connected to the computer system and surrounded by the circle formed by the plurality of screens 510 to respectively project visual angle images onto the screens 510 to further displaying the ring-filed image. Besides, a plurality of audio devices 530 may be also respectively placed about the screens 510 to provide the user with environmental sound effects.

Refer then to Figure 6, wherein a top view diagram of a video information apparatus according to yet another preferred embodiment of the present invention is shown. In Figure 6, the display apparatus is composed of an environmental screen 610 and a rotational projector 620. The rotational projector 620 is electrically connected to the computer system and surrounded by the environmental screen 610, thus projecting the ring-filed image onto the environmental screen 610. The rotational projector 620 uses the character of transient persistence of vision in human eyes, and the lens thereof rotates a full circle in 1/40 second to show the ring-filed image presenting a 360° angle-of-view. Additionally, a plurality of audio devices 630 may be also respectively placed about the environmental screen 610 to provide the user with environmental sound effects.

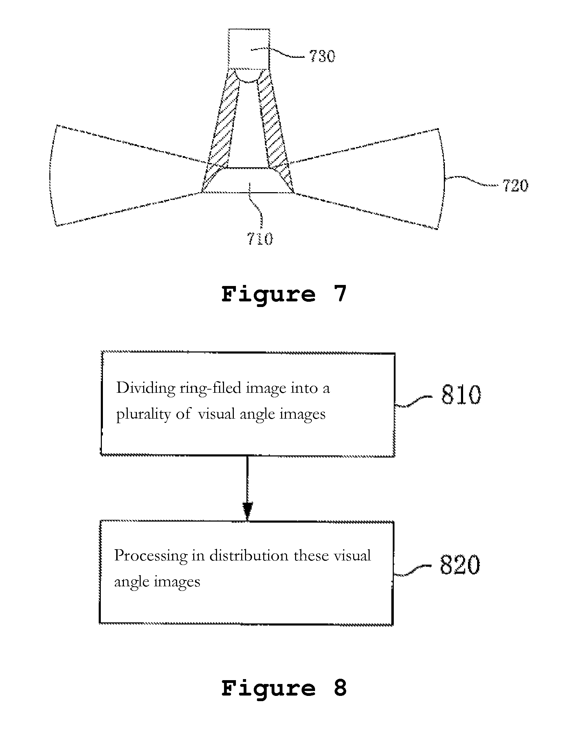

Refer subsequently to Figure 7, wherein a top view diagram of a video information apparatus according to still another preferred embodiment of the present invention is shown. In Figure 7, the display apparatus is composed of a circular curved mirror 710, an environmental screen 720 and a projector 730. Herein the environmental screen 720 surrounds the circular curved mirror 710. The projector 730 is electrically connected to the computer system and projects the ring-filed image onto the circular curved mirror 710, thus projecting the environment image onto the environmental screen 720 by means of the circular curved mirror 710 to display the ring-filed image.

Refer further to Figure 8, wherein a flowchart of the image process method according to a preferred embodiment of the present invention is shown. In Figure 8, an image process method is provided, comprising the following steps:
(a) dividing the ring-filed image into a plurality of visual angle images (Step 810);
(b) processing in distribution the plurality of visual angle images (Step 820). In this way, it is possible to employ computing resources like workstations, personal computers or central processing units to allocate visual angle images to each workstation, personal computer or central processing unit, *e*.*g*. the computer system, to process in distribution to successfully achieve the objective of providing ring-filed image having high quality.

In a preferred embodiment of the present invention, these visual angle images are respectively displayed on a plurality of display apparatuses. For example, these visual angle images are respectively displayed on a plurality of displays arranged in circle, such as Liquid Crystal Displays (LCD's) or plasma displays. Or, alternatively, these visual angle images are respectively projected onto a plurality of screens arranged in circle by means of a plurality of projectors.

In another preferred embodiment of the present invention, it is also possible to first combine these visual angle images into a ring-filed image then have the generated ring-filed image displayed. For example, through a rotational projector, such an ring-filed image can be projected onto an environmental screen surrounding the rotational projector, in which the rotational projector uses the character of transient persistence of vision in human eyes, and the lens thereof rotates a full circle in 1/40 second to show the ring-filed image presenting a 360° angle-of-view. Alternatively, such a ring-filed image may be also projected onto a circular curved mirror by a projector, then through the reflection from the circular curved mirror, projected onto the environmental screen surrounding the circular curved mirror.

Furthermore, the interactions and responses between a plurality of objects in the ring-filed image can be computed after combination of the visual angle images. For example, the movement track after collision of two objects in the ring-filed image can be computed after combining the visual angle images, in order to prevent inconsistency in the ring-filed image caused by distributive process as the above-said two objects are respectively located in different visual angle images.

Similarly, the influence on the ring-filed image caused by the data inputted *via* the input module can be also computed after combination of the visual angle images. For example, when a user inputs an instruction by means of a joystick to command a game character to swing the bat, the movement track of the game character's swing can be computed after combination of the visual angle images in order to prevent occurrence of possible inconsistency in the ring-filed image caused by distributive process in case that the said swing track passes through different visual angle images.

In yet another embodiment of the present invention, the interactions and responses of the plurality of objects in individual visual angle image can be computed in the step of distributive process (Step 820). In this way, the computations of the interactions and responses of the plurality of objects in individual visual angle image can be allocated to each workstation, personal computer or central processing unit, such as the disclosed computer system, to process in distribution so as to achieve the obj ective of providing the ring-filed image having high quality.

Similarly, the influence on the individual visual angle image caused by the data inputted *via* the input module can be also computed in the step of distributive process (Step 820). In this way, the computations for the influence on the individual visual angle image caused by the data inputted *via* the input module can be allocated to each workstation, personal computer or central processing unit, such as the disclosed computer system, to process in distribution so as to achieve the objective of providing the ring-filed image having high quality.

The aforementioned interactions and responses as well as the influence on respective visual angle image by inputted data can be optionally determined, based on actual conditions, to be computed after the combination of the visual angle images or else during the step of distributive process (Step 820). Also, suitable implementations for both operations can be flexibly selected in accordance with actual design and demand, without having to be conjunctively performed after the combination of the visual angle images or else during the step of distributive process (Step 820). In other word, both operations can be flexibly determined to be centrally processed in terms of certain portions, while other portions are completed in a distributive approach.

From the preferred embodiments of the present invention described *supra*, it can be seen that the present invention provides the following advantages:
(1) the video information apparatus and image processing method according to the present invention uses the computer system to process in distribution the ring-filed image, it is possible to effectively display ring-filed image or plural visual angle images with high quality.
(2) the video information apparatus and image processing method according to the present invention uses the computer system to process in distribution the ring-filed image, rather than other expensive high-end computer systems, e.g. supercomputers, it provides the advantage of reduced cost.
(3) the video information apparatus and image processing method according to the present invention can flexibly allow certain computation jobs to be centrally performed or processed in distribution, it can thus overcome the problem of poor consistency in displayed image of current technology.

Although the present invention has been disclosed heretofore by means of preferred embodiments, it is not intended to limit the scope of the present invention thereto; skilled ones in the art can consider and make various changes and modifications equivalent in effects without departing from the spirit and scope of the present invention. Therefore, the scope of the present invention filed for legal protection is to be based on the delineation defined by the following claims.

## Claims

1. A video information apparatus for displaying an ring-filed image, comprising:
a computer system, consisting of:
a master control system, which is used to divide the ring-filed image into a plurality of visual angle images;
at least one controlled system, which is electrically connected to the master control system to process in distribution these visual angle images; and
a display apparatus, which is electrically connected to the computer system to display the ring-filed image.

2. The video information apparatus according to claim 1, which is **characterized in that** the computer system is in a single-host-multiple-processor architecture.

3. The video information apparatus according to claim 1, which is
**characterized in that** the master control system further consists of:
an interaction/response module, which is used to computer the interactions and responses between a plurality of objects in the ring-filed image.

4. The video information apparatus according to claim 3, which is
**characterized in that** the master control system further consists of:
an input module, which is used to input data; and
an action input computing module, which is electrically connected to the interaction/response module and the input module, used to compute the influence on the ring-filed image caused by the data inputted *via* the input module.

5. The video information apparatus according to claim 3, which is
**characterized in that** the master control system further consists of:
an angle-of-view sound processing module, which is electrically connected to the interaction/response module to process the sound effects of these visual angle images.

6. The video information apparatus according to claim 3, which is
**characterized in that** the master control system further consists of:
a visual angle image processing module, which is electrically connected to the interaction/response module to process the visual effects of these visual angle images.

7. The video information apparatus according to claim 1, which is
**characterized in that** the controlled system further consists of:
an interaction/response module, which is used to respectively compute the interactions and responses between a plurality of objects in these visual angle images.

8. The video information apparatus according to claim 7, which is
**characterized in that** the controlled system further consists of:
an input module, which is used to input data; and
an action input computing module, which is electrically connected to the interaction/response module and the input module, used to compute the influence on the one of these visual angle images caused by the data inputted *via* the input module.

9. The video information apparatus according to claim 7, which is
**characterized in that** the controlled system further consists of:
an angle-of-view sound processing module, which is electrically connected to the interaction/response module to respectively process the sound effects of these visual angle images.

10. The video information apparatus according to claim 7, which is
**characterized in that** the controlled system further consists of:
a visual angle image processing module, which is electrically connected to the interaction/response module to respectively process the visual effects of these visual angle images.

11. The video information apparatus according to claim 1, which is
**characterized in that** the display apparatus further consists of:
a plurality of displays, which are electrically connected to the computer system and arranged in a circle to display the ring-filed image.

12. The video information apparatus according to claim 1, which is
**characterized in that** the display apparatus further consists of:
a plurality of screens, which are arranged in a circle; and
a plurality of projectors, which are electrically connected to the computer system and surrounded by the circle to respectively project these visual angle images onto these screens, further displaying the ring-filed image.

13. The video information apparatus according to claim 1, which is
**characterized in that** the display apparatus further consists of:
an environmental screen; and
a rotational projector, which is electrically connected to the computer system and surrounded by the environmental screen to project the ring-filed image onto the environmental screen.

14. The video information apparatus according to claim 1, which is
**characterized in that** the display apparatus further consists of:
a circular curved mirror;
an environmental screen, which surrounds the circular curved mirror; and
a projector, which is electrically connected to the computer system and projects the ring-filed image onto the circular curved image, thus reflecting the ring-filed image onto the environmental screen by means of the circular curved mirror, thereby displaying the ring-filed image.

15. An image process method, comprising the following steps:
dividing an ring-filed image into a plurality of visual angle images; and
processing in distribution these visual angle images.

16. The image process method according to claim 15, which is **characterized**
**in** further comprising:
respectively displaying these visual angle images.

17. The image process method according to claim 15, which is **characterized**
**in** further comprising:
combining these visual angle images to form the ring-filed image; and
displaying the ring-filed image.

18. The image process method according to claim 17, which is **characterized**
**in** further comprising:
after combining these visual angle images, computing the interactions and responses between a plurality of objects in the ring-filed image.

19. The image process method according to claim 17, which is **characterized**
**in** further comprising:
after combining these visual angle images, computing the influence on the ring-filed image caused by the data inputted *via* the input module.

20. The image process method according to claim 15, which is **characterized in that** the step of processing in distribution these visual angle images further comprises:
respectively computing the interactions and responses between a plurality of objects in these visual angle images.

21. The image process method according to claim 15, which is **characterized in that** the step of processing in distribution these visual angle images further comprises:
respectively computing the influence on these visual angle images caused by the data inputted *via* the input module.
